# EUROPEAN PATENT SPECIFICATION

(11) **EP 3 587 849 B1**
(45) Date of publication and mention of the grant of the patent: **09.11.2022**
(21) Application number: 19182487.9
(22) Date of filing: 26.06.2019
(51) Int. Cl.: F16D 25/08

(54) **CENTRAL ACTUATOR FOR A HYDRAULIC OR PNEUMATIC CLUTCH ACTUATION**
ZENTRALER AKTUATOR FÜR EINE HYDRAULISCHE ODER PNEUMATISCHE KUPPLUNGSBETÄTIGUNG
ACTIONNEUR CENTRAL POUR UNE ACTIONNEMENT D'EMBRAYAGE HYDRAULIQUE OU PNEUMATIQUE

(30) Priority: 29.06.2018 DE 102018115882
(43) Date of publication of application: 01.01.2020
(73) Proprietor: FTE automotive GmbH, 96106 Ebern (DE)
(72) Inventor: GNYP, Jan, D-96106 Ebern (DE)
(74) Representative: Valeo Powertrain Systems

(56) References cited:
- EP-A2- 1 876 371
- WO-A1-97/42426
- FR-A1- 2 879 701
- US-A- 6 062 366

## Description

The present invention relates to a central actuator for a hydraulic or pneumatic clutch actuation according to the preamble of Claim 1. The invention particularly relates to a central actuator of a hydraulic clutch actuation for a motor vehicle friction clutch, as is in widespread use in the motor vehicle industry. In this case, the central actuator may be configured either as a central release mechanism or as a central engagement mechanism or also as a dual-central engagement mechanism.

A traditional hydraulic clutch actuation for motor vehicles has a master cylinder attached to a compensating tank filled with hydraulic fluid, which master cylinder can be operated via a clutch pedal, for example. The master cylinder is hydraulically connected to a slave cylinder via a pressure line, so that the pressure produced in the master cylinder by depressing the clutch pedal can be transferred via the fluid column in the pressure line to the slave cylinder. As a result, the release bearing of the friction clutch is acted upon by an actuation force from the slave cylinder, in order to disconnect the clutch pressure plate from the clutch carrier plate via a release mechanism and therefore the engine from the motor vehicle gearbox.

In order to guarantee uniform operation of the friction clutch coupled with the smallest possible space requirement of the slave cylinder, it has been known in the art for some time for the slave cylinder to be configured as a ring cylinder which is arranged around the clutch or gear shaft and is preferably fastened to the gear casing. A ring piston is arranged in a displaceable manner in the ring cylinder in the axial direction of the clutch or gear shaft, which ring piston is operatively connected to the release bearing of the frictional clutch. During hydraulic exposure of the ring cylinder via the pressure line, the ring piston acts via the release bearing on the release lever or on the fingers of a membrane spring of the friction clutch, in order to release this. Slave cylinders of this kind are also referred to as central release mechanisms (CSC = Concentric Slave Cylinder) on account of their concentric arrangement relative to the clutch or gear shaft. In the case of a central release mechanism, the ring piston of the ring-shaped slave cylinder acts on corresponding engaging components of a friction clutch during hydraulic exposure via an engagement bearing, in order to engage said friction clutch.

Modern central actuators have a cylinder housing produced primarily from plastic for cost and weight reasons, said cylinder housing having at least one outer cylinder wall which delimits a ring-shaped pressure chamber radially outwards, in which pressure chamber the ring piston operatively connected to the clutch is displaceably received. If necessary, the cylinder housing produced from plastic also exhibits an inner cylinder wall which delimits the pressure chamber radially inwards and guides the ring piston; otherwise, a guide sleeve made primarily from sheet steel is arranged concentrically within the cylinder wall and fastened to the cylinder housing, in order to delimit the pressure chamber radially inwards and guide the ring piston. The cylinder housing also has a pressure connection opening into the pressure chamber, via which the pressure chamber can be optionally exposed to the pressure medium, in order to release the clutch.

The method of choice for the cost-effective production of cylinder housings of this kind in large unit numbers is plastics injection moulding. So that the high loads occurring in the region of the cylinder walls during exposure to pressure of the pressure chamber can be reliably withstood and leaks avoided, it is known in the art for cylinder walls made of plastic to be strengthened using reinforcement elements.

Hence, a cylinder housing of a central release mechanism made of injection-moulded plastic is known from DE 199 51 414 A1 (see in particular Fig. 2 and the associated description in column 5, lines 59 to 67), in which in order to strengthen the cylinder housing, the outer cylinder wall thereof is provided with reinforcement (reference number 21) which is intended to prevent a radial widening of the outer cylinder wall during operation of the central release mechanism, i.e. during exposure of the pressure chamber to pressure. In particular, it is proposed in this prior art that a sheet metal sleeve produced without cutting should be produced as reinforcement, which sheet metal sleeve can be fastened by pressing or shrink-fitting onto the lateral surface of the outer cylinder wall. By pressing or shrink-fitting, however, the region of the cylinder walls made of plastic requiring reinforcement is additionally vulnerable to mechanical stress from outside, which means that this kind of reinforcement does not seem suitable for avoiding the aforementioned risk of leaks.

In addition, WO 90/04116 A1 (Fig. 2, Fig. 4, Fig. 5 & Fig. 10: reference number 56), DE 103 23 570 A1 (Fig. 3: reference number 19) or DE 10 2008 006 202 A1 (Fig. 1 & Fig. 3: reference number 17), for example, disclose a cylinder housing for central release mechanisms made of injection-moulded plastic, in which a possibly sleeve-shaped reinforcement is also coated during the injection-moulding process, particularly in the region of a cylinder wall. On the one hand, however, this complicates the injection mould and the actual injection-moulding process, because the reinforcement only has to be inserted into the injection mould which has a more complex design in relation to the pouring channel guide and the ventilation channel and held there in a suitably oriented manner. Support elements possibly used for this purpose lead to corresponding holes in the plastic during injection moulding. On the other hand, this causes unwanted, comparatively long dwell times of the injection-moulded workpiece in the injection mould in mass production, as the plastic in the injection mould can cool and harden less quickly due to the heat storage capacity of the metal reinforcement.

A central actuator according to the preamble of Claim 1 is known from DE 20 2011 109 244 U1. In this case, following the injection-moulding of the cylinder housing, a reinforcement sleeve is pulled onto the cylinder wall and fastened there by means of a snap connection. For this purpose, the reinforcement sleeve is reformed inwardly at its front end into a conical latching portion which along with a rib formed on the outer periphery of the cylinder wall forms the snap connection. When the reinforcement sleeve is slipped onto the cylinder wall, the latching portion locks with the rib formed on the cylinder wall.

Further WO 97/42426 A1, discloses a central actuator wherein the slave cylinder (10) comprises a piston (11) axially displaceable relative to a cylinder wall (14,15) to operate an associated device. The cylinder wall comprises an axially fixed portion (14) and a telescoping axially moveable portion (15).

The problem addressed by the present invention is that of proposing an alternative central actuator of the kind referred to above for a hydraulic or pneumatic clutch actuation, which actuator can be produced as easily and costeffectively as possible and can reliably resist the hydraulic or pneumatic forces occurring during operation with a securely fastened reinforcement ring.

This problem is solved according to the invention by a central actuator according to Claim 1. Advantageous embodiments and appropriate developments of the invention result from the dependent claims, the description or the figures, wherein features described or shown here may represent an object of the invention individually or in any combination with one another, unless the context clearly suggests to the contrary.

In the case of a central actuator for a hydraulic or pneumatic clutch actuation which comprises a cylinder housing with an inner cylinder wall and an outer cylinder wall made from a plastics material which outwardly or inwardly delimits a ring-shaped pressure chamber in the radial direction, in which pressure chamber a ring piston that can be operatively connected to the clutch is received in an axially displaceable manner and in which the outer cylinder wall is provided with at least one reinforcement ring on its peripheral side facing away from the pressure chamber, the solution according to the invention provides that the reinforcement ring rests against the outside of the outer cylinder wall and that the reinforcement ring is divided in the axial direction into two abutting partial regions, wherein a first of these two partial regions is coated with plastic from the cylinder housing on the outside so that a secure hold of the reinforcement ring on the outer cylinder wall is provided in the axial direction, and wherein the other of these two partial regions is free from plastic from the cylinder housing on the outside.

In other words, this therefore means that the reinforcement ring is coated on the outside over a partial region of its axial extent with plastic of the cylinder housing, while the remaining residual region of its axial extent is free from plastic of the cylinder housing on the outside.

The only partial coating of the reinforcement ring means that a secure hold on the cylinder wall in the axial direction is achieved without openings, recesses or projections having to be provided for this purpose in or on the reinforcement ring, which facilitates the use of simpler and therefore more cost-effective reinforcement rings. The special forming of form-fitting fastening means on the cylinder wall for the axial hold of the reinforcement ring is not necessary either, which simplifies construction.

At the same time, however, the freely accessible partial region of the surface on the outside also facilitates a simple positioning of the reinforcement ring in the injection mould, as a result of which production is simplified and the production costs turn out to be correspondingly lower. The disadvantages of the prior art as indicated previously, which occur during the complete coating of the reinforcement element with plastic due to the relative complexity involved in a precisely positioned fixing in the injection mould, can therefore be avoided in the case of the central actuator configured according to the invention.

In addition, the reinforcement ring in the case of the central actuator formed according to the invention is neither completely pressed nor shrink-fitted onto the outer cylinder wall, so that the disadvantages indicated in this respect in relation to the prior art of additional stressing of the plastics structure being reinforced in the case of the central actuator according to the invention do not occur. The associated risk of possible distortion of the cylinder housing made of plastic is thereby avoided.

Further advantages lie in the fact that the dependence on possible dimensional tolerances is smaller due to the partial coating with plastic and the reinforcement ring remains securely in position even at higher temperatures. In particular, the only partial outer coating of the reinforcement ring leads to a further reinforcing action and dimensional stability in the partial region surrounded by plastic.

The plastic applied to the outside of the reinforcement ring also prevents the formation of sharp edges in the cylinder wall which would otherwise occur at the contact point between the reinforcement ring and the adjacent region of the cylinder wall. Moreover, the plastic applied to the outside of the reinforcement ring can at the same time still be used for further functions, such as for the formation of ramps for a pretensioning spring of the central actuator or in order to form connections for further hydraulic elements.

The reinforcement ring is preferably made of a ring-shaped metal sheet, which means that with simple construction cost-effective production can be achieved. For example, the reinforcement ring may be made of aluminium or spring steel.

The axial length of the reinforcement ring can be freely adapted depending on the respective application. According to a preferred embodiment, the free second partial region of the reinforcement ring on the outside in the axial direction has a greater length than the first partial region of the reinforcement ring coated with plastic on the outside.

According to a first embodiment of the central actuator according to the invention, an axial space is created between the first partial region surrounded by plastic on the outside and a flange portion of the cylinder housing which connects the outer cylinder wall to the inner cylinder wall. The reinforcement ring may then be particularly located in an axially central region of the outer cylinder wall which, in relation to the loading by the pressure medium, has to be supported critically and therefore for the avoidance of harmful structural changes to the plastic. The precise axial positioning of the reinforcement ring can likewise be adapted to the respective application.

According to an alternative embodiment of the invention, the first partial region of the reinforcement ring may be surrounded on the outside by a flange portion of the cylinder housing made of plastic which connects the outer cylinder wall to the inner cylinder wall. In this case, the reinforcement ring then supports a region of the outer cylinder wall adjacent to the bottom of the ring-shaped pressure chamber, without an axial space existing between the reinforcement ring and the flange portion of the cylinder housing.

It is particularly advantageous for the reinforcement ring to have a flat surface on the inside facing the outer cylinder wall, i.e. for it to have no grooves and no projections. However, an adequate axial hold of the reinforcement ring can be achieved through the partial plastic coating on the outside.

A further preferred embodiment of the present invention is also a central actuator of the kind referred to above, in which a further reinforcement ring lies on the inside of the inner cylinder wall made of plastic, which wall forms a guide sleeve for the ring piston and delimits the ring-shaped pressure chamber inwards, wherein the reinforcement ring is free from plastic from the cylinder housing on the inside over its entire axial longitudinal extent.

Hence, this inner reinforcement ring - unlike a completely coated reinforcement element - can also easily be supported from the inside and positioned in the injection mould, where this inner reinforcement ring is also only partially coated with plastic, namely on the outside and on the front. Here, too, production is therefore correspondingly simplified and made more cost-effective. A secure axial hold in this case is achieved through an axial abutment of the front ends of the reinforcement ring against the adjacent cheeks of the plastic coating.

Thus the present invention further relates to a central actuator of the kind referred to above which comprises both at least one inner reinforcement ring and also an outer reinforcement ring of the kinds described above in each case. In this case, the reinforcement ring attached to the outside of the outer cylinder wall is therefore only surrounded by plastic from the cylinder housing over a partial region of its axial extent, while its remaining axial residual region is likewise free from plastic from the cylinder housing on the outside, as the at least one reinforcement ring abutting the inner cylinder wall on the inside is free from plastic from the cylinder housing on its inside. Both the outer and also the inner reinforcement ring are each coated only partially with plastic in this case, which leads to the previously described advantages in each case.

It is particularly advantageous for the further reinforcement ring attached to the inner cylinder wall on the inside to be axially remote from the flange portion of the cylinder housing which connects the outer cylinder wall to the inner cylinder wall. In this case, the precise axial positioning of the inner reinforcement ring can also be adapted to the respective application.

According to a particularly preferred embodiment of the invention, it is provided that the internal surface of the inner reinforcement ring which is preferably likewise smooth, i.e. free from grooves and/or projections, ends on at least one front end of the reinforcement ring in a radial direction in a step-free manner with the inside of the inner cylinder wall. This means that at least one, but preferably both, axial edges of the reinforcement ring merge with the inside of the inner cylinder wall in a flush manner, so that in this case there is no step extending over the inner circumference of the inner cylinder wall.

Moreover, the present invention also relates to a method of producing a cylinder housing for a central actuator of the kind described previously. This production method at least comprises the following process steps:
- a reinforcement ring is positioned over a partial region remaining free from plastic in an injection mould for the cylinder housing,
- the cylinder housing is produced in this injection mould by plastic injection moulding, wherein the reinforcement ring is only partially coated with plastic.

Further advantages and features of the invention result from the following description of the exemplary embodiments depicted in the drawings. In the drawings:
- Figure 1:: shows a longitudinal sectional view of a traditional central release mechanism,
- Figure 2:: shows a longitudinal sectional view of a first embodiment of a cylinder housing configured according to the invention,
- Figure 3:: shows a longitudinal sectional view of a variant of the first embodiment of a cylinder housing according to the invention,
- Figure 4:: shows a longitudinal sectional view of a second embodiment of a cylinder housing configured not in accordance with the invention and
- Figure 5:: shows a longitudinal sectional view of a third embodiment of a cylinder housing configured according to the invention.

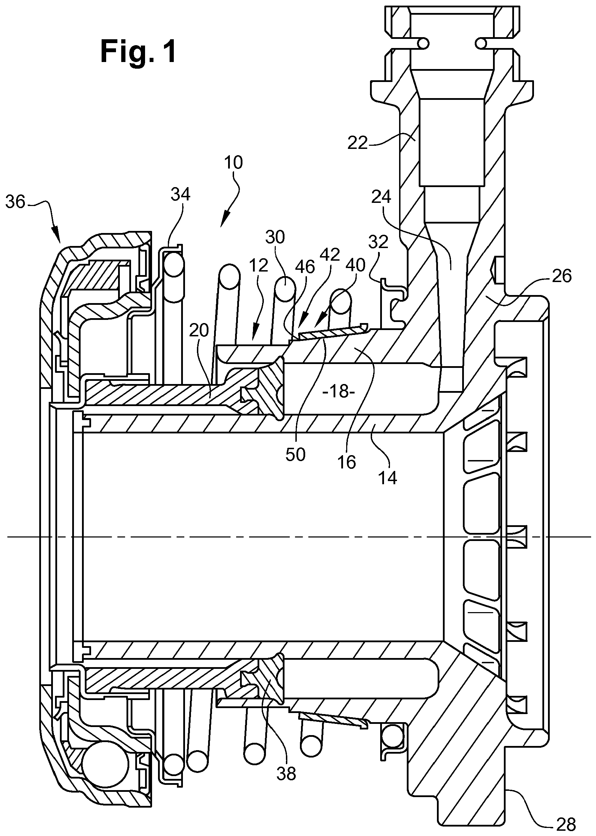

Figure 1 shows a central release mechanism 10 for a hydraulic clutch actuation for a dry frictional clutch in the non-mounted state in the basic position. The central release mechanism 10 has an injection-moulded cylinder housing 12 made of plastic, for example of GF-filled polyphthalamide, having two concentrically arranged cylinder walls, namely an inner cylinder wall 14 and an outer cylinder wall 16 which delimit a ring-shaped pressure chamber 18. A ring piston 20 that can be operatively connected to the clutch (not depicted) is displaceably received in an axial direction in the pressure chamber 18, which ring piston can be optionally exposed to a pressure medium via a pressure connection fitting 22 of the cylinder housing 12, in order to disengage the friction clutch through displacement of the ring piston 20. For this purpose, the pressure connection fitting 22 is connected to the pressure chamber 18 via a channel 24 formed in the cylinder housing 12, so that the pressure medium, namely a hydraulic fluid, can be supplied to the pressure chamber 18 via the channel 24.

The cylinder walls 14 and 16 arranged concentrically to one another are connected to on another at their end depicted on the right in Figure 1 via a flange portion 26. The flange portion 26 is provided on the outer periphery with a plurality of angularly spaced fastening eyes (not shown) which are used in the motor vehicle in a manner known per se for fastening the central release mechanism 10 to a gearbox wall or a gearbox cover (not shown) by means of screws, for example, which pass through the fastening eyes and pull the central release mechanism 10 with its front end 28 of the cylinder housing 12 against the gearbox wall or the gearbox cover. The cylinder housing 12 with the pressure connection fittings 22 adjoining the flange portion 26, its cylinder walls 14 and 16 and the flange portion 26 connecting these and supporting the fastening eyes is preferably injection-moulded from plastic in a single piece.

The outer cylinder wall 16 is enclosed by a pretensioning spring 30, in the exemplary embodiment shown by a conically expanding helical pressure spring which rests on its right end in Figure 1 via a ring-shaped sheet-metal part 32 on the flange portion 26 of the cylinder housing 12 and applies a defined pretensioning force to a release bearing 36 known per se on its left side in Figure 1 via a deep-drawn spring plate 34 made of metal sheet. The release bearing 36 is fastened in a suitable manner to the left end of the ring piston 20 shown in Figure 1, so that the release bearing 36 can be displaced when the ring-shaped pressure chamber 18 is exposed to pressure in an axial direction, i.e. a horizontal direction in Figure 1, in order to release or engage the dry friction clutch in a manner known per se.

At the right end of the ring piston 20 in Figure 1, which overlaps the outer cylinder wall 16 in the basic position shown in an axial direction, a dynamic seal 38 in the form of an elastomer sealing sleeve is attached in a form-fitting manner. The sealing sleeve shown in a non-deformed state in this case to simplify the representation lies close to both the inner cylinder wall 14 of the cylinder housing 12 and also to the outer cylinder wall 16 of the cylinder housing 12, in order to seal the pressure chamber 18 to the left in relation to Figure 1.

The outer cylinder wall 16 is provided with a reinforcement sleeve 40 on its outer circumference which, when the parts belonging to the central release mechanism 10 are in the position shown in Figure 1, is fastened to the outer cylinder wall 16 by means of a snap connection 42 which is provided at the end of the reinforcement sleeve 40 facing away from the pressure connection fitting 22. The reinforcement sleeve 40 is arranged roughly in the centre region of the outer cylinder wall 16 which has to be supported against the pressure in the pressure chamber 18 in order to avoid damaging structural changes to the plastic.

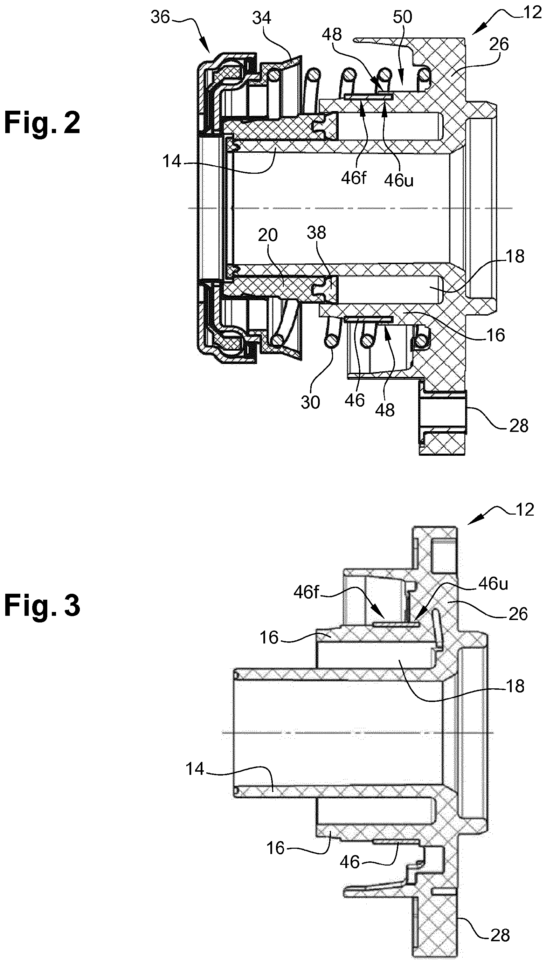

In the case of the exemplary embodiments according to the invention shown in Figures 2, 3 and 5, an outer reinforcement ring 46 and optionally an inner reinforcement ring 44 in each case is/are only partially coated with the plastic of the cylinder housing 12. This coating means that additional means for the axial hold of the reinforcement rings 44 and 46, for example a snap connection 42 of the kind shown in Figure 1, are not necessary.

In the case of the embodiment shown in Figure 2, the outer reinforcement ring 46 bears against an axially central region of the outside of the outer cylinder wall 16. It is divided into two axially adjacent partial regions 46f and 46u which together cover the entire axial extent of the reinforcement ring 46. The first partial region 46u is coated on its outside by a collar 48 made of the plastics material of the cylinder housing 12. This plastics collar 48 covers the first partial region 46u over its entire extent. It is substantially thinner in the radial direction than the thickness of the reinforcement ring 46, wherein this thickness is in turn substantially smaller than the thickness of the portion of the outer cylinder wall 16 which is thereby reinforced. The second partial region 46f of the reinforcement ring 46 axially attached directly to the first partial region 46u is not coated on its outer side and is therefore free from the plastic of the cylinder housing 12.

Since the reinforcement ring 46 in this case bears against an axially centre region of the outer cylinder wall 16, it is located at an axial distance 50 from the flange portion 26 of the cylinder housing 12 which connects the outer cylinder wall 16 to the inner cylinder wall 14. Beyond this space 50, the outer cylinder wall 16 has the same outer diameter as the collar 48, which means that in this case there is no seam or even a step on the outside.

By comparison, in the case of the embodiment shown in Figure 3, an axial space of this kind does not exist. In this case, the outer reinforcement ring 46 bears axially against the flange portion 26 of the cylinder housing 12, so that its first partial region 46u is surrounded on the outside by the plastics material of the flange portion 26.

In both embodiments (Figs. 2 and 3), the reinforcement ring 46 is configured as a flat cylinder face both on its inside and also on its outside, without grooves and also without radially projecting regions in each case.

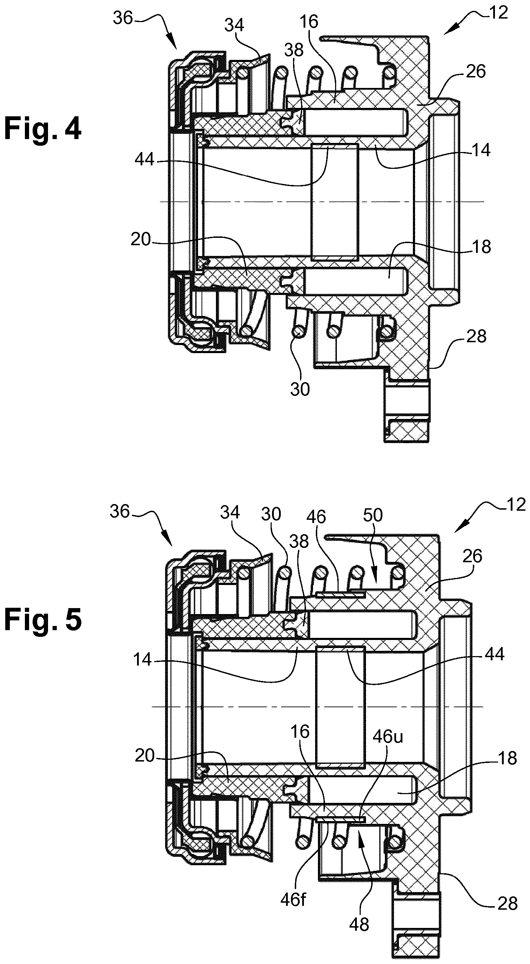

In the case of the embodiment shown in Figure 4, which is not in accordance with the invention, an inner reinforcement ring 44 lies in an axially central region on the inside of the inner cylinder wall 14, in order to stabilize said cylinder wall. In this case, the reinforcement ring 44 is only in contact with the plastics material of the cylinder housing 12 on its outside and on its two front ends, whereas its inside surface is completely free from the plastic of the cylinder housing 12.

The embodiment depicted in Figure 5 corresponds to a combination of the two embodiments shown in Figures 2 and 4. In this case, an inner reinforcement ring 44 is attached to the inner cylinder wall 14 and also an outer reinforcement ring 46 to the outer cylinder wall 16. Here, too, the outer reinforcement ring 46 is only surrounded by a thin collar 48 of plastic from the cylinder housing over a partial region 46u of its axial extent, while its remaining axial partial region 46f is free from the plastic of the cylinder housing 12 on the outside.

In a corresponding manner, the inner reinforcement ring 44 abutting the inner cylinder wall 14 has no contact with the plastic of the cylinder housing 12 on the inside. Both the inner reinforcement ring 44 and the outer reinforcement ring 46 are therefore each only partially coated with plastic from the cylinder housing 12.

The two reinforcement rings 44 and 46 are equally wide in design in the axial direction. They also lie at the same height in the axial direction, in other words in the same axial portion of the ring-shaped pressure chamber 18 which is therefore stabilized here both inwardly and outwardly in this case.

## Claims

1. Central actuator (10) for a hydraulic or pneumatic clutch actuation, having a cylinder housing (12) which has an inner cylinder wall (14) and an outer cylinder wall (16) made of a plastic which delimits a ring-shaped pressure chamber (18) in a radial direction, in which a ring piston (20) that can be operatively connected to the clutch is displaceably received, wherein the outer cylinder wall (16) is provided with at least one reinforcement ring (46) on its peripheral side facing away from the pressure chamber (18), **characterized in that** the reinforcement ring (46) is attached to the outside of the outer cylinder wall (16) and is divided in its axial extent into two abutting partial regions (46u, 46f), wherein the first partial region (46u) is coated on the outside by plastic from the cylinder housing (12) so that a secure hold of the reinforcement ring (46) on the outer cylinder wall (16) is provided in the axial direction, and wherein the second partial region (46f) is free from plastic from the cylinder housing (12) on the outside.

2. Central actuator (10) according to claim 1, **characterized in that** the second partial region (46f) of the reinforcement ring (46) is axially longer than the first partial region (46u) of the reinforcement ring (46).

3. Central actuator (10) according to claim 1 or 2, **characterized in that** the first partial region (46u) is axially removed from a flange portion (26) of the cylinder housing (12) which connects the outer cylinder wall (16) to the inner cylinder wall (14).

4. Central actuator (10) according to claim 1 or 2, **characterized in that** the first partial region (46u) is surrounded on the outside by a flange portion (26) of the cylinder housing (12) made of plastic which connects the outer cylinder wall (16) to the inner cylinder wall (14).

5. Central actuator (10) according to one of the preceding claims, **characterized in that** the reinforcement ring (46) has a surface on the inside facing the outer cylinder wall (16) which is free from grooves and/or projections.

6. Central actuator (10) according to one of claims 1 to 5, **characterized in that** in addition to the reinforcement ring (46) attached to the outside of the outer cylinder wall (16), a further reinforcement ring (44) is attached to the inside of the inner cylinder wall (14), wherein the further reinforcement ring (44) is free from plastic from the cylinder housing (12) on the inside over its entire axial extent.

7. Central actuator (10) according to claim 6, **characterized in that** the further reinforcement ring (44) is axially remote from a flange portion (26) of the cylinder housing (12) which connects the outer cylinder wall (16) to the inner cylinder wall (14).

8. Central actuator (10) according to claims 7 or 8, **characterized in that** the inside surface of the reinforcement ring (44) ends on at least one axial edge radially flush with the inside of the inner cylinder wall (14).

9. Method of producing the cylinder housing (12) for a central actuator (10) according to one of the preceding claims, **characterized in that** it comprises the following process steps:
- a reinforcement ring (44, 46) is positioned over a partial region remaining free from plastic in an injection mould for the cylinder housing (12),
- the cylinder housing (12) is produced in this injection mould by plastic injection moulding, wherein the reinforcement ring (44, 46) is only partially coated with plastic.

## Patentansprüche

1. Zentralaktuator (10) für eine hydraulische oder pneumatische Kupplungsbetätigung, der ein Zylindergehäuse (12) aufweist, das eine innere Zylinderwand (14) und eine äußere Zylinderwand (16) aus einem Kunststoff aufweist, die eine ringförmige Druckkammer (18) in einer radialen Richtung begrenzt, in der ein Ringkolben (20), der mit der Kupplung wirkverbunden werden kann, verschiebbar aufgenommen ist, wobei die äußere Zylinderwand (16) an ihrer der Druckkammer (18) abgewandten Umfangsseite mit mindestens einem Verstärkungsring (46) versehen ist, **dadurch gekennzeichnet, dass** der Verstärkungsring (46) an der Außenseite der äußeren Zylinderwand (16) angebracht und in seiner axialen Erstreckung in zwei aneinander anliegende Teilbereiche (46u, 46f) unterteilt ist, wobei der erste Teilbereich (46u) an der Außenseite durch Kunststoff von dem Zylindergehäuse (12) derart umhüllt ist, dass in der axialen Richtung ein sicherer Halt des Verstärkungsrings (46) an der äußeren Zylinderwand (16) bereitgestellt ist, und wobei der zweite Teilbereich (46f) an der Außenseite frei von Kunststoff von dem Zylindergehäuse (12) ist.

2. Zentralaktuator (10) nach Anspruch 1, **dadurch gekennzeichnet, dass** der zweite Teilbereich (46f) des Verstärkungsrings (46) axial länger als der erste Teilbereich (46u) des Verstärkungsrings (46) ist.

3. Zentralaktuator (10) nach Anspruch 1 oder 2, **dadurch gekennzeichnet, dass** der erste Teilbereich (46u) von einem Flanschabschnitt (26) des Zylindergehäuses (12) axial entfernt ist, der die äußere Zylinderwand (16) mit der inneren Zylinderwand (14) verbindet.

4. Zentralaktuator (10) nach Anspruch 1 oder 2, **dadurch gekennzeichnet, dass** der erste Teilbereich (46u) an der Außenseite durch einen Flanschabschnitt (26) des Zylindergehäuses (12) aus Kunststoff umgeben ist, der die äußere Zylinderwand (16) mit der inneren Zylinderwand (14) verbindet.

5. Zentralaktuator (10) nach einem der vorhergehenden Ansprüche, **dadurch gekennzeichnet, dass** der Verstärkungsring (46) eine Oberfläche auf der Innenseite aufweist, die der äußeren Zylinderwand (16) zugewandt ist, die frei von Nuten und/oder Vorsprüngen ist.

6. Zentralaktuator (10) nach einem der Ansprüche 1 bis 5, **dadurch gekennzeichnet, dass** zusätzlich zu dem an der Außenseite der äußeren Zylinderwand (16) angebrachten Verstärkungsring (46) ein weiterer Verstärkungsring (44) an der Innenseite der inneren Zylinderwand (14) angebracht ist, wobei der weitere Verstärkungsring (44) über seine gesamte axiale Erstreckung an der Innenseite frei von Kunststoff von dem Zylindergehäuse (12) ist.

7. Zentralaktuator (10) nach Anspruch 6, **dadurch gekennzeichnet, dass** der weitere Verstärkungsring (44) von einem Flanschabschnitt (26) des Zylindergehäuses (12) axial entfernt ist, der die äußere Zylinderwand (16) mit der inneren Zylinderwand (14) verbindet.

8. Zentralaktuator (10) nach Anspruch 7 oder 8, **dadurch gekennzeichnet, dass** die Innenfläche des Verstärkungsrings (44) an mindestens einer axialen Kante radial bündig mit der Innenseite der inneren Zylinderwand (14) endet.

9. Verfahren zum Herstellen des Zylindergehäuses (12) für einen Zentralaktuator (10) nach einem der vorhergehenden Ansprüche, **dadurch gekennzeichnet, dass** es die folgenden Verfahrensschritte umfasst:
- ein Verstärkungsring (44, 46) wird über einem Teilbereich, der frei von Kunststoff bleibt, in einer Spritzgussform für das Zylindergehäuse (12) positioniert,
- das Zylindergehäuse (12) wird in dieser Spritzgussform durch Kunststoffspritzgießen hergestellt, wobei der Verstärkungsring (44, 46) nur teilweise mit Kunststoff umhüllt wird.

## Revendications

1. Actionneur central (10) pour un actionnement d'embrayage hydraulique ou pneumatique, ayant un logement cylindrique (12) qui a une paroi cylindrique intérieure (14) et une paroi cylindrique extérieure (16) faites d'un plastique qui délimite une chambre de pression de forme annulaire (18) dans une direction radiale, dans laquelle un piston annulaire (20) qui peut être fonctionnellement raccordé à l'embrayage est reçu de façon déplaçable, dans lequel la paroi cylindrique extérieure (16) est pourvue d'au moins un anneau de renfort (46) sur son côté périphérique faisant face à l'opposé de la chambre de pression (18), **caractérisé en ce que** l'anneau de renfort (46) est attaché à l'extérieur de la paroi cylindrique extérieure (16) et est divisé, dans son étendue axiale, en deux régions partielles contiguës (46u, 46f), dans lequel la première région partielle (46u) est revêtue sur l'extérieur par du plastique du logement cylindrique (12) pour qu'une retenue fixe de l'anneau de renfort (46) sur la paroi cylindrique extérieure (16) soit fournie dans la direction axiale, et dans lequel la seconde région partielle (46f) est dépourvue de plastique du logement cylindrique (12) sur l'extérieur.

2. Actionneur central (10) selon la revendication 1, **caractérisé en ce que** la seconde région partielle (46f) de l'anneau de renfort (46) est axialement plus longue que la première région partielle (46u) de l'anneau de renfort (46).

3. Actionneur central (10) selon la revendication 1 ou 2, **caractérisé en ce que** la première région partielle (46u) est axialement retirée d'une partie bride (26) du logement cylindrique (12) qui raccorde la paroi cylindrique extérieure (16) à la paroi cylindrique intérieure (14).

4. Actionneur central (10) selon la revendication 1 ou 2, **caractérisé en ce que** la première région partielle (46u) est entourée, sur l'extérieur, par une partie bride (26) du logement cylindrique (12) faite de plastique qui raccorde la paroi cylindrique extérieure (16) à la paroi cylindrique intérieure (14).

5. Actionneur central (10) selon l'une des revendications précédentes, **caractérisé en ce que** l'anneau de renfort (46) a une surface, sur l'intérieur, faisant face à la paroi cylindrique extérieure (16) qui est dépourvue de rainures et/ou de saillies.

6. Actionneur central (10) selon l'une des revendications 1 à 5, **caractérisé en ce que**, en plus de l'anneau de renfort (46) attaché à l'extérieur de la paroi cylindrique extérieure (16), un anneau de renfort supplémentaire (44) est attaché à l'intérieur de la paroi cylindrique intérieure (14), dans lequel l'anneau de renfort supplémentaire (44) est dépourvu de plastique du logement cylindrique (12), sur l'intérieur, sur son étendue axiale entière.

7. Actionneur central (10) selon la revendication 6, **caractérisé en ce que** l'anneau de renfort supplémentaire (44) est axialement éloigné d'une partie bride (26) du logement cylindrique (12) qui raccorde la paroi cylindrique extérieure (16) à la paroi cylindrique intérieure (14).

8. Actionneur central (10) selon les revendications 7 ou 8, **caractérisé en ce que** la surface intérieure de l'anneau de renfort (44) se termine sur au moins un bord axial radialement au même niveau que l'intérieur de la paroi cylindrique intérieure (14).

9. Procédé de production du logement cylindrique (12) pour un actionneur central (10) selon l'une des revendications précédentes, **caractérisé en ce qu'**il comprend les étapes de processus suivantes :
- un anneau de renfort (44, 46) est positionné pardessus une région partielle restant dépourvue de plastique dans un moule d'injection pour le logement cylindrique (12),
- le logement cylindrique (12) est produit dans ce moule d'injection par moulage par injection de plastique, dans lequel l'anneau de renfort (44, 46) est seulement partiellement revêtu de plastique.
